# EUROPEAN PATENT APPLICATION

(11) **EP 2 541 832 A1**
(43) Date of publication of application: **02.01.2013**
(21) Application number: 11780059.9
(22) Date of filing: 24.01.2011
(51) Int. Cl.: H04L 9/32

(54) **CONVERGED SERVICE SYSTEM AND IMPLEMENTATION METHOD THEREOF**

(30) Priority: 14.05.2010 CN 201010175263
(71) Applicant: ZTE Corporation, Shenzhen, Guangdong 518057 (CN)
(72) Inventor: WANG, Fenglai, Shenzhen Guangdong 518057 (CN); YANG, Qingping, Shenzhen Guangdong 518057 (CN); ZHU, Kezhi, Shenzhen Guangdong 518057 (CN); ZOU, Yan, Shenzhen Guangdong 518057 (CN)
(74) Representative: Howson, Richard G.B.
(86) International application number: PCT/CN2011/070529
(87) International publication number: WO 2011/140837

(57) **Abstract**

The disclosure provides a converged service system and a method of implementing the same, in order to overcome the technical problem due to independent between the service user and the service authentication in the existing three-network converged service system, and the technical problem includes difficult source sharing and low authentication performance. In the disclosure, by performing management to the service user in the three-network converged system, a two-level data module including the customer level and the service user level is formed, the customer information is used for converged service data management, and distribution control is performed on service authentication according to the service type when performing service authentication, thereby implementing service data sharing and unified controlling between different service users and forming a three-network converged service authentication system which is unifiedly controllable and has high performance and the capacity of which is easily expanded.

## Description

### TECHNICAL FIELD OF THE INVENTION

The disclosure relates to a converged service field and in particular to a converged service system and a method of implementing the same on the basis of a two-layer data model of a customer and a service user.

### BACKGROUND OF THE INVENTION

At present, the development of the IP technology makes it possible to incorporate a plurality of existing service sub-networks into a converged multi-service network. The service markets of the telecommunication network, the Internet and the cable television network begin to converge, in which case a three-network converged service emerges.

However, in the related art, the management and the operation of different network services are operated by respective service systems independently, which results in the following problems:
(1) the service users are independent from each other, making it inconvenient for sharing and unifiedly controlling the service resource between a number of service users;
(2) the service authentications are independent from each other, making the authentication effectiveness of a three-network converged service to be a bottleneck; the authentication performance of a certain service can be guaranteed by this service system, however, when a user uses a three-network converged service in this service system, a complex logic judgement is required to judge whether a service system user has a permission for using a three-network converged service, which influences the authentication performance of the converged service and results in system complexity;
(3) it is inconvenient to develop a deep three-network converged network service, wherein the deep three-network converged network is referred to cross-network subscription, cross-network collection, displacement television and other application scenarios; the cross-network subscription is referred to one network subscription multi-network watch, for example, subscribing on a mobile phone and then using on the IPTV; the cross-network collection is referred to continuous playing one video between different terminals; this type of service is predicated on the association relationship between different service system users, and the converged service shall be authenticated unifiedly to implement seamless use of the three-network converged service.

### SUMMARY OF THE INVENTION

In view of the above, the disclosure provides a converged service system and a method of implementing the same, so as to overcome the difficulties in sharing resources between different service users, improving the authentication effectiveness and developing a three-network converged service due to independence between a service user and service authentication in the existing three-network converged service system.

The technical solutions of the disclosure are provided as follows.

A converged service system is provided, which includes:
a converged service data management sub-system, configured to manage converged service data, to generate, for a common service, the converged service data comprising service user information and service data information, and to generate, for a converged service, the converged service data comprising customer information, service user information and service data information;
a customer management sub-system, configured to manage the customer information, the service user information and a correlation between a customer and a service user; and
a converged service authentication management sub-system, configured to perform authentication distribution and service authentication in accordance with the converged service data managed by the converged service data management sub-system and the correlation between the customer and the service user managed by the customer management sub-system.

Preferably, the converged service data management sub-system further includes:
a subscription relationship management module, configured to manage subscription relationship data generated by the service user subscribing a service, to generate, for the common service, a subscription relationship comprising a corresponding relationship between a service user and service data, and to generate, for the converged service, a subscription relationship comprising a corresponding relationship among the customer, the service user and the service data;
a collection information management module, configured to management collection information generated by the service user when collecting the service data, to generate, for the common service, the collection information comprising the corresponding relationship between the customer user and collected service data, and to generate, for the converged service, the collection information comprising the corresponding relationship among the customer, the service user and the collected service data;
a bookmark information management module, configured to management bookmark information generated by the service user when marking bookmark for the service data, to generate, for the common service, the bookmark information comprising the corresponding relationship between the customer user and the marked service data, and to generate, for the converged service, the bookmark information comprising the corresponding relationship among the customer, the service user and the marked service data.

Preferably, the converged service authentication management sub-system includes:
an authentication distribution module, configured to distribute authentication to a corresponding service authentication module according to a type of the service used by the service user; and
a service authentication module, configured to authenticate the user according to the converged service date managed by the converged service data management sub-system and the association relationship between the customer and the service user managed by the customer management sub-system.

Preferably, the service authentication module includes:
a common service authentication module, configured to authenticate use of the common service, wherein the authentication comprises: judging whether a subscription relation corresponding to the service required by the service user exists in the converged service data management sub-system according to a service user identifier; if yes, then determining the authentication as passed, otherwise determining the authentication as failed; and
a converged service authentication module, configured to authenticate use of the converged service, wherein the authentication comprises: first of all, judging whether a subscription relation corresponding to the service required by the service exists in the converged service data management sub-system according to a service user identifier; if yes, then determining the authentication as passed; otherwise, acquiring a customer identifier to which the service user belongs according to the correlation between the customer and the service user stored in the customer management sub-system, and judging whether a corresponding subscription relation exists in the converged service data management sub-system by taking the customer identifier and service identifier of the required service as keywords; if the corresponding subscription relation exists then passing the authentication, otherwise the authentication fails.

Preferably, the service authentication module adopts a distributed structure.

The disclosure also provides a method for implementing a converged service system, on the basis of the system above, and the method includes:
step A, reserving a service by a service user to generate converged service data comprising service user information and service data information for a common service, and generate the converged service data comprising customer information, service user information and service data information for a converged service;
step B, correlating the service user through a customer, and generating and managing a correlation between the customer and the service user;
step C, distributing, when receiving a request for using a service initiated by the service user, authentication to a corresponding authentication module according to the required service to perform the authentication, and performing the authentication by a service authentication module according to the converged service data and the correlation between the customer and the service user.

Further the converged service data includes a subscription relation, collection information and bookmark information, wherein
the subscription relation is configured to identify the service data subscribed by the service user; for a common service, the subscription relation comprises a corresponding relationship between the service user and the service data; and for a converged service user, the subscription relation comprises a corresponding relationship among the customer, the service user and the service data;
the collection information is configured to identify the service data collected by the service user; for the common service, the collection information comprises the corresponding relationship between the customer user and collected service data; for the converged service, the collection information comprises the corresponding relationship among the customer, the service user and the collected service data; and
the bookmark information is configured to identify a bookmark marked by the service user for the service data; for the common service, he bookmark information comprises the corresponding relationship between the customer user and the marked service data; for the converged service, the bookmark information comprises the corresponding relationship among the customer, the service user and the marked service data.

Further, the required service includes a common service and a converged service, wherein
authentication process for the common service comprises: judging whether a subscription relation corresponding to the service required by the service user exists; if yes, then determining the authentication as passed, otherwise determining the authentication as failed;
authentication process for the converged service comprises: first of all, judging whether a subscription relation corresponding to the service required by the service user exists according to a service user identifier; if yes, then determining the authentication as passed; otherwise, acquiring a customer identifier to which the service belongs according to the correlation between the customer and the service user, and judging whether a corresponding subscription relation exists by taking the customer identifier and service identifier of the required service as keywords; if the corresponding subscription relation exists then passing the authentication, otherwise the authentication fails.

According to the disclosure, service users in a three-network converged service system are managed, a two-level data module including a customer level and a service user level is formed, the customer information is used for converged service data management, and distribution control is performed on service authentication according to the service type. Accordingly, sharing and unified controlling of the service data between different service users are implemented and a three-network converged service authentication system which can be managed unifiedly, has high performance and an expandable capacity.

### BRIEF DESCRIPTION OF THE DRAWINGS

Fig. 1 is a structural diagram showing a converged service system according to the disclosure;
Fig. 2 is a flow chart showing a method for implementing a converged service according to the disclosure; and
Fig. 3 is a schematic diagram showing a two-level data model including a customer and a service user according to the disclosure.

### DETAILED DESCRIPTION OF THE INVENTION

The basic idea of the disclosure is that: a customer is associated with a number of individual service users; the associations between the customer and the service users are unifiedly managed; one customer may be associated with more than one common service users and more than one converged service users; for a common service, a subscription relation includes a correspondence relationship between the service user and service data; for a converged service, the subscription relation includes the correspondence relationship among the customer, the service user and the service data; and the service authentication is distributed to a service authentication module corresponding to the type of the service for performing. According to the disclosure, converged services may be shared and efficient authentication of the common service and the converged service can be implemented.

In order to make the purpose, technique scheme and advantages more clear, the disclosure will be further described in detail through the following embodiments, with reference to the accompanying drawings.

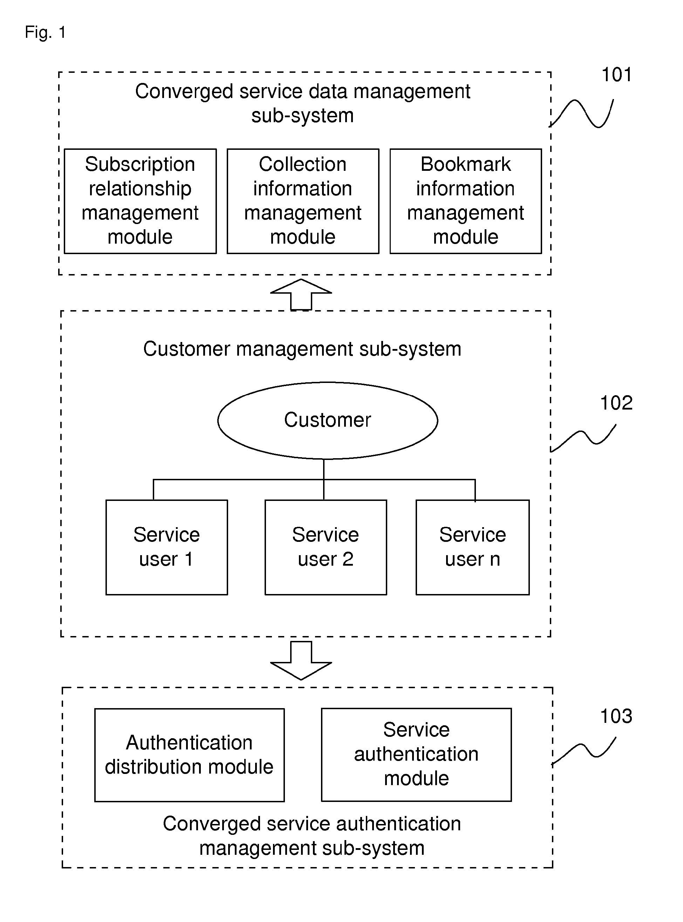

Fig. 1 shows a converged service system provided by the disclosure, the system includes a converged service data management sub-system, a customer management sub-system and a converged service authentication management sub-system, wherein
the converged service data management is configured to manage converged service data, to generate, for a common service, the converged service data comprising service user information and service data information, and to generate, for a converged service, the converged service data comprising customer information, service user information and service data information. The service data and the converged service data are different, wherein the service data is referred to attribute information of the service itself such as a name of the service, a charging standard of the service and the like; the converged service data described in the disclosure is referred to service related data relating to sharing the converged data on the bases of a two-level data module including the customer level and the service user level, which include a subscription relationship, collection information and bookmark information and the like;
the converged service data management sub-system further includes: a subscription relationship management module, a collection information management module and a bookmark information management module;
the subscription relationship management module is configured to manage subscription relationship data generated by the service user subscribing a service, to generate, for the common service, a subscription relationship comprising a corresponding relationship between a service user and service data, and to generate, for the converged service, a subscription relationship comprising a corresponding relationship among the customer, the service user and the service data;
the collection information management module is configured to management collection information generated by the service user when collecting the service data, to generate, for the common service, the collection information comprising the corresponding relationship between the customer user and collected service data, and to generate, for the converged service, the collection information comprising the corresponding relationship among the customer, the service user and the collected service data;
the bookmark information management module is configured to management bookmark information generated by the service user when marking bookmark for the service data, to generate, for the common service, the bookmark information comprising the corresponding relationship between the customer user and the marked service data, and to generate, for the converged service, the bookmark information comprising the corresponding relationship among the customer, the service user and the marked service data.

For example, when a user is watching a video on demand of a certain movie online, he may not watch the whole movie for a certain reason, in this case a bookmark can be marked and he can continually watch the movie from the breakpoint. The bookmark information is more utility for the three-network converged service, for example when a person is watch a certain program on an IPTV terminal, a bookmark of the converged service can be marked in this case, so that a telephone terminal can continually play this program on the telephone according to the bookmark information to seamlessly play the program.

The customer management sub-system is configured to manage the customer information, the service user information and a correlation between a customer and a service user, wherein
the customer information is referred to information related to the customer registered in the customer management sub-system, such as a name of the customer, a identifier of the customer and the like; the service user information is referred to information (such as a name of the user, a identifier of the user, a type of the service and the like) related to the customer registered in the three-network converged service system by the service user, for example, IPTV user information, Wireless Application Protocol (WAP) user information, and telephone movie, short message and multimedia message user information and the like.
the correlation between the customer and the service user is referred to a correlation between the customer and a number of service user; the customer user includes a common customer user and a converged service user; a two-level data management of corresponding service system and converged service system is implemented on the basis of the correlation between the customer and the service user.

The converged service authentication management sub-system is configured to perform authentication distribution and service authentication in accordance with the converged service data managed by the converged service data management sub-system and the correlation between the customer and the service user managed by the customer management sub-system; the converged service authentication management sub-system further includes an authentication distribution module and a service authentication module wherein
the authentication distribution module is configured to distribute authentication to a corresponding service authentication module according to a type of the service used by the service user; and
the service authentication module is configured to judge whether the service has an authority to use the required service or not; the service authentication module includes a common service authentication module and a converged service authentication module in accordance with the type of the service, wherein
the common service authentication module is configured to authenticate use of the common service, wherein the authentication comprises: judging whether a subscription relation corresponding to the service required by the service user exists in the converged

service data management sub-system according to a service user identifier; if yes, then determining the authentication as passed, otherwise determining the authentication as failed; and
the converged service authentication module is configured to authenticate use of the converged service, wherein the authentication comprises: first of all, judging whether a subscription relation corresponding to the service required by the service exists in the converged service data management sub-system according to a service user identifier; if yes, then determining the authentication as passed; otherwise, acquiring a customer identifier to which the service user belongs according to the correlation between the customer and the service user stored in the customer management sub-system, and judging whether a corresponding subscription relation exists in the converged service data management sub-system by taking the customer identifier and service identifier of the required service as keywords; if the corresponding subscription relation exists then passing the authentication, otherwise the authentication fails.

The service authentication module can adopt a distributed structure; by improving the performance of a single service authentication module and increasing the number of the service authentication module, the authentication performance of the service system can be improved and the capacity of the system can be expanded.

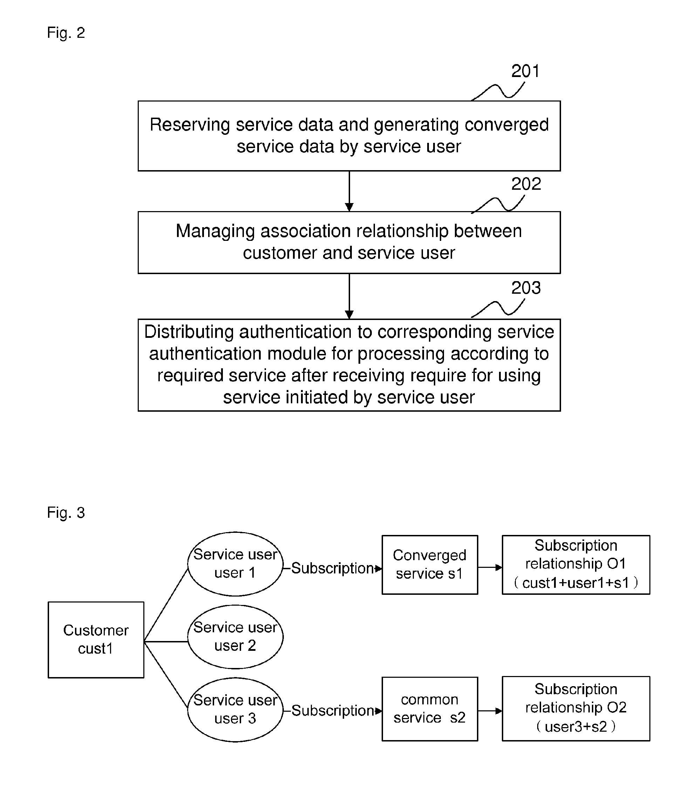

Correspondingly, a method for implementing the converged service system is provided by the disclosure on the basis of the system above, as shown in Fig. 2 the method includes the following steps.

Step 201, reserving a service by a service user to generate converged service data including service user information and service data information for a common service, and generate the converged service data comprising customer information, service user information and service data information for a converged service;
the converged service data includes: subscription relationship, collection information and bookmark information; the converged service data management sub-system receive and process service reservation of the service user, and manage the generated converged service data.

The subscription relationship is used to identify the service data subscribed by the service user; for the common service, the corresponding relationship includes the correlation between the service user and the service data; and for the converged service, the subscription relationship includes the corresponding relationship among the customer, the service user and the service data.

The collection information is used to identify the service data collected by the service user; for the common service, the collection information includes the corresponding relation between the service user and the collected information; and for the converged service, the collection information includes the corresponding relation among the customer, the service user and the collected service data.

The bookmark information is used to identify the bookmark marked for the service data by the service user; for the common service, the bookmark information includes the corresponding relation between the service user and the marked information; and for the converged service, the bookmark information includes the corresponding relation among the customer, the service user and the marked service data.

For example, Fig. 3 is a schematic diagram showing a two-level data model including a customer and a service user in the converged service system of the disclosure, wherein a customer cust1 is correlated with three service user, namely user1, user2 and user 3; the service user user1 subscribe a converged service s1, and the subscription relationship generated after reservation includes cust1, user1 and s1 information; and the service user user3 subscribe a converged service s2, and the subscription relationship generated after reservation includes user3 and s2 information.

Step 202, correlating the service user through a customer, and generating and managing a correlation between the customer and the service user;
the customer management sub-system receives registration of the customer and the service user, generates customer information and service user information, and establishes the correlation between the customer and the service user according to requirement of the service user of the converged service, namely, establishes a correlation between different customer users according to a customer identifier to establish a two-level data module including the customer level and the service user level, wherein converged service sharing can be implemented on the basis of the data module.

Step 203, when receiving a requirement for using the service from the service user, distributing the authentication to a corresponding service authentication module according to the type of the required service, and executing, by the service authentication module, the authentication according to the converged service data and the correlation between the customer and the service user.

For the common service, judging whether a subscription relationship corresponding to the service required by the service user exists in the converged service data management sub-system in accordance with the service user identifier, if yes, then determining the authentication as passed, otherwise determining the authentication as failed; and
for the converged service, first of all, judging whether a subscription relation corresponding to the service required by the service user exists in the converged service data management sub-system according to a service user identifier; if yes, then determining the authentication as passed; otherwise, acquiring a customer identifier to which the service user belongs according to the correlation between the customer and the service user stored in the customer management sub-system, and judging whether a corresponding subscription relation exists in the converged service data management sub-system by taking the customer identifier and service identifier of the required service as keywords; if the corresponding subscription relation exists then passing the authentication, otherwise the authentication fails.

To this end, according to the disclosure, the converged service system based on service management and the implementation method thereof has the following advantages, comparing to the existing converged service authentication system:
(1) unified control of the converged service is implemented through management of the customer, because the disclosure adopts a two-level data module including the customer level and the service user level to unifiedly perform customer management, namely, uses a one-level data module, i.e., the service data level data module to manage the common service, and uses a two-level data module including the customer level and the service user level to manage the converged service; and
(2) the authentication effectiveness of the service system can be improved only by increasing the number of the service authentication modules and meanwhile the capacity of the system is expanded, because the authentication distribution module performs flexible distribution to the common service and the converged service according to the actual situation of the system and the service authentication module may be deployed in a distributed manner.

It can be seen that the disclosure proposes a converged service authentication method on the basis of the customer management and implements a three-network converged service authentication system which is uniformly controllable and has high performance and the capacity of which is easily expanded.

Of course, there may be other various embodiments, and various modifications and variations may be performed by those skilled in the related art without departing the scope of the disclosure, and these modifications and variations all lie in the scope of the attached claims.

## Claims

1. A converged service system, comprising:
a converged service data management sub-system, configured to manage converged service data, to generate, for a common service, the converged service data comprising service user information and service data information, and to generate, for a converged service, the converged service data comprising customer information, service user information and service data information;
a customer management sub-system, configured to manage the customer information, the service user information and association relationship between a customer and a service user; and
a converged service authentication management sub-system, configured to perform authentication distribution and service authentication in accordance with the converged service data managed by the converged service data management sub-system and the association relationship between the customer and the service user managed by the customer management sub-system.

2. The system according to claim 1, wherein the converged service data management sub-system further comprises:
a subscription relationship management module, configured to manage subscription relationship data generated by the service user subscribing a service, to generate, for the common service, subscription relationship comprising a correspondence relationship between the service user and the service data, and to generate, for the converged service, subscription relationship comprising a correspondence relationship among the customer, the service user and the service data;
a collection information management module, configured to manage collection information generated by the service user collecting the service data, to generate, for the common service, the collection information comprising the corresponding relationship between the customer user and collected service data, and to generate, for the converged service, the collection information comprising the corresponding relationship among the customer, the service user and the collected service data;
a bookmark information management module, configured to manage bookmark information generated by the service user marking a bookmark for the service data, to generate, for the common service, the bookmark information comprising the corresponding relationship between the customer user and the marked service data, and to generate, for the converged service, the bookmark information comprising the corresponding relationship among the customer, the service user and the marked service data.

3. The system according to claim 1, wherein the converged service authentication management sub-system comprises:
an authentication distribution module, configured to distribute authentication to a corresponding service authentication module according to a type of the service used by the service user; and
a service authentication module, configured to authenticate the user according to the converged service date managed by the converged service data management sub-system and the association relationship between the customer and the service user managed by the customer management sub-system.

4. The system according to claim 1, wherein the service authentication module comprises:
a common service authentication module, configured to authenticate use of the common service, wherein the authentication comprises: judging whether a subscription relation corresponding to the service required by the service user exists in the converged service data management sub-system according to a service user identifier; if yes, then determining the authentication as passed, otherwise determining the authentication as failed; and
a converged service authentication module, configured to authenticate use of the converged service, wherein the authentication comprises: first of all, judging whether a subscription relation corresponding to the service required by the service exists in the converged service data management sub-system according to a service user identifier; if yes, then determining the authentication as passed; otherwise, acquiring a customer identifier to which the service user belongs according to the correlation between the customer and the service user stored in the customer management sub-system, and judging whether a corresponding subscription relation exists in the converged service data management sub-system by taking the customer identifier and service identifier of the required service as keywords; if the corresponding subscription relation exists then passing the authentication, otherwise the authentication fails.

5. The system according to claim 4, wherein the service authentication module is formed in a distributed manner.

6. A method for implementing a converged service system, comprising:
reserving a service by a service user to generate converged service data comprising service user information and service data information for a common service, and generate the converged service data comprising customer information, service user information and service data information for a converged service;
correlating the service user through a customer, and generating and managing a correlation between the customer and the service user;
distributing, when receiving a request for using a service initiated by the service user, authentication to a corresponding authentication module according to the required service to perform the authentication, and performing the authentication by a service authentication module according to the converged service data and the correlation between the customer and the service user.

7. The method according to claim 6, wherein the converged service data comprises a subscription relation, collection information and bookmark information, wherein
the subscription relation is configured to identify the service data subscribed by the service user; for a common service, the subscription relation comprises a corresponding relationship between the service user and the service data; and for a converged service user, the subscription relation comprises a corresponding relationship among the customer, the service user and the service data;
the collection information is configured to identify the service data collected by the service user; for the common service, the collection information comprises the corresponding relationship between the customer user and collected service data; for the converged service, the collection information comprises the corresponding relationship among the customer, the service user and the collected service data; and
the bookmark information is configured to identify a bookmark marked by the service user for the service data; for the common service, he bookmark information comprises the corresponding relationship between the customer user and the marked service data; for the converged service, the bookmark information comprises the corresponding relationship among the customer, the service user and the marked service data.

8. The method according to claim 6, wherein the required service comprises a common service and a converged service, wherein
authentication process for the common service comprises: judging whether a subscription relation corresponding to the service required by the service user exists; if yes, then determining the authentication as passed, otherwise determining the authentication as failed;
authentication process for the converged service comprises: first of all, judging whether a subscription relation corresponding to the service required by the service user exists according to a service user identifier; if yes, then determining the authentication as passed; otherwise, acquiring a customer identifier to which the service belongs according to the correlation between the customer and the service user, and judging whether a corresponding subscription relation exists by taking the customer identifier and service identifier of the required service as keywords; if the corresponding subscription relation exists then passing the authentication, otherwise the authentication fails.
